# EUROPÄISCHE PATENTSCHRIFT

(11) **EP 2 468 410 B1**
(45) Veröffentlichungstag und Bekanntmachung des Hinweises auf die Patenterteilung: **15.07.2015**
(21) Anmeldenummer: 12156911.5
(22) Anmeldetag: 08.01.2007
(51) Int. Cl.: B02C 25/00, B02C 18/22

(54) **Vorrichtung zum Zerkleinern von Teilen beliebiger Art**
Device for grinding parts of any kind
Dispositif de broyages de pièces de type quelconque

(30) Priorität: 24.01.2006 DE 102006003529
(43) Veröffentlichungstag der Anmeldung: 27.06.2012
(62) Teilanmeldung aus: 07711127.6
(73) Patentinhaber: HERBOLD MECKESHEIM GMBH, 74909 Meckesheim (DE)
(72) Erfinder: Watzelt, Holger, 69151 Neckargemünd (DE); Herbold, Karlheinz, 68535 Edingen (DE)
(74) Vertreter: Patent- und Rechtsanwälte Ullrich & Naumann

(56) Entgegenhaltungen:
- DE-U1- 29 610 848
- GB-A- 2 390 043

## Beschreibung

Die Erfindung betrifft eine Vorrichtung zum Zerkleinern von Teilen beliebiger Art, insbesondere von Kunststoffen, vorzugsweise von Kunststoffhohlkörpern wie zum Beispiel Kunststoffflaschen, mit einer Beschickungseinrichtung und einer Zerkleinerungseinrichtung, wobei die Beschickungseinrichtung mindestens eine Fördereinheit und die Zerkleinerungseinrichtung einen werkzeugbestückten Rotor umfasst, der innerhalb eines Gehäuses dreht, wobei die Fördereinheit zumindest im Bereich unmittelbar vor dem Rotor unter einem Winkel im Bereich zwischen 45° und 90° zu der Rotorachse fördert und dass die Fördereinheit als Förderschnecke ausgeführt ist.

Eine derartige Vorrichtung ist aus der DE 296 10 848 U1 und aus der US 4,932,595 bekannt geworden. Aus der GB 2 390 043 A ist eine Vorrichtung zum Verbrennen von Verpackungsmaterialballen gezeigt, welche eine Ballenzuführeinrichtung, eine Ballenzerkleinerungseinrichtung, ein Transportband für zerkleinertes Material sowie eine entsprechende Zuführeinrichtung und eine Heizeinrichtung zum Verbrennen des zerkleinerten Materials.

Vorrichtungen der gattungsbildenden Art sind seit Jahren in den unterschiedlichsten Ausführungsformen aus der Praxis bekannt. Lediglich beispielhaft wird dazu auch auf die DE 38 13 879 verwiesen. Bei der dort bekannten Vorrichtung handelt es sich im Konkreten um eine Zerkleinerungsmaschine für thermoplastische Abfälle. Über einen Trichter wird das Mahlgut aufgegeben und gelangt unmittelbar von dem Trichter über eine Fördereinheit in die eigentliche Mühle, die einen in einem Gehäuse drehenden Rotor umfasst. Die Beschickungseinrichtung bzw. die Fördereinheit ist als Schnecke ausgeführt. Die Drehachsen von Schnecke und Rotor verlaufen parallel zueinander, so dass das Mahlgut über die Schnecke kopfseitig zu dem Rotor gelangt und dort von diesem erfasst werden muss. Dies ist insbesondere bei höheren Drehzahlen problematisch, da nämlich gerade leichtes Mahlgut, insbesondere Mahlgut aus Kunststoffhohlkörpern, dazu neigt, durch die Drehbewegung des Rotors zurückgeschlagen zu werden. Das Hineinfördern des Mahlguts in den Rotor ist daher äußerst problematisch. Außerdem hat man festgestellt, dass bei der bekannten Art des Hineinförderns von Mahlgut in den Bereich des Rotors ganz erhebliche Schallemissionen auftreten, die es stets zu reduzieren gilt.

Der vorliegenden Erfindung liegt daher die Aufgabe zugrunde, ein Vorrichtung zum Zerkleinern von Teilen beliebiger Art, insbesondere von Kunststoffen, vorzugsweise von Kunststoffhohlkörpern wie zum Beispiel Kunststoffflaschen, derart auszugestalten und weiterzubilden, dass im Bereich des Rotors eine hinreichend gute Materialannahme stattfindet, dass sich nämlich das Mahlgut mühelos in den Bereich des Rotors hineinfördern lässt. Arbeitsgeräusche sollen reduziert sein.

Erfindungsgemäß wird die voranstehende Aufgabe durch die Merkmale des Patentanspruchs 1 gelöst. Danach ist die in Rede stehende Vorrichtung dadurch gekennzeichnet, dass die Fördereinheit zumindest im Bereich unmittelbar vor dem Rotor unter einem Winkel im Bereich zwischen 45° und 90° zu der Rotorachse fördert.

In erfindungsgemäßer Weise ist zunächst einmal erkannt worden, dass die zuvor erörterten Probleme dadurch zu mindern sind, dass man von der bewährten parallelen Anordnung von Förderachse und Drehachse des Rotors abweicht, nämlich dadurch, dass die Fördereinheit zumindest im Bereich unmittelbar vor dem Rotor unter einem Winkel zwischen 45° und 90° zu der Rotorachse fördert. Dies hat den Vorteil, dass das Mahlgut gerade nicht parallel zur Drehbewegung des Rotors in dessen Bereich gefördert wird, wodurch das Mahlgut regelmäßig zurückschlägt und wodurch eine erhebliche Lärmemission auftritt. Ganz im Gegenteil wird hier ein ganz anderer Weg der Zuführung gewählt, nämlich unter einem Winkel im Bereich zwischen 45° und 90° zu der Rotorachse, vorzugsweise unter einem Winkel von etwa 90° zur Rotorachse. In bevorzugter Weise wird demnach das Mahlgut orthogonal zu der Drehachse des Rotors gefördert, so dass das Mahlgut entsprechend der Ausgestaltung des Rotors sowie der Ausgestaltung des darum angeordneten Gehäuses in idealer Weise aufgreifbar ist, nämlich entsprechend der Vorkehrung und Anordnung der Messer und/oder Schneidzähne.

In vorteilhafter Weise sind mehrere Fördereinheiten vorgesehen, so dass das Mahlgut parallel zum Rotor förderbar ist, nämlich entsprechend der Breite der Zerkleinerungseinrichtung. Dabei lässt sich das Mahlgut über die gesamte Breite der Zerkleinerungseinrichtung fördern und der Zerkleinerungseinrichtung zuführen. Dies bewirkt einen ganz erheblichen Durchsatz.

In weiter vorteilhafter Weise sind die Fördereinheiten äquidistant zueinander angeordnet. In weiter vorteilhafter Weise lassen sich die Abstände zwischen den einzelnen Fördereinheiten variieren. Ein besonderer Einstellmechanismus kann dazu vorgesehen sein.

Grundsätzlich ist es denkbar, dass die Fördereinheiten parallel zueinander verlaufen. Ebenso ist es jedoch auch denkbar, den Verlauf der Fördereinheiten schräg zueinander, vorzugsweise unter einem spitzen Winkel zueinander, zu gestalten. Dabei könnte bereits beim Fördern eines voluminösen Mahlguts, beispielsweise beim Fördern von PET-Flaschen, bewerkstelligt werden, dass diese zumindest teilweise komprimiert bzw. deformiert oder gar aufgerissen werden.

Die Fördereinheiten können im Wesentlichen in einer Ebene angeordnet sein. Will man das Mahlgut bereits während des Förderns mit Kräften beaufschlagen, kann es von weiterem Vorteil sein, die Fördereinheiten in unterschiedlichen Ebenen zueinander, möglichst schräg zueinander verlaufend, anzuordnen.

In Bezug auf das Fördern des Mahlgutes ist es möglich, die Fördereinheiten im Wesentlichen waagrecht anzuordnen. Ebenso ist es denkbar, das Mahlgut vertikal oder unter einem beliebigen Winkel zwischen 0° und 180° zur Horizontalen der Zerkleinerungseinrichtung zuzuführen, und zwar je nach Bedarf. Dabei ist darauf zu achten, dass die Fördereinheit zumindest im Bereich unmittelbar vor dem Rotor den erforderlichen Winkel im Bereich zwischen 45°und 90°zu der Rotorachse hat.

Es hat sich herausgestellt, dass die Materialannahme im Bereich der Zerkleinerungseinrichtung dann besonders gut ist, wenn die Längsachsen der Fördereinheiten unmittelbar mit der Rotorachse fluchten oder allenfalls geringfügig versetzt zur Rotorachse verlaufen. Dabei kann die Förderstrecke in verschiedene Förderabschnitte unterteilt sein, so dass das Mahlgut über die Förderstrecke hinweg in der Richtung umlenkbar ist.

Die Fördereinheit ist als Förderschnecke ausgeführt. Mehrere Förderschnecken können als Fördereinheiten vorgesehen sein. Dabei sollten die Förderschnecken so gegeneinander wirken, dass sie ein das Fördergut einziehendes Verhalten haben. Entsprechend sind die Drehrichtung und die Ausgestaltung der Förderschnecken aufeinander abzustimmen.

Entsprechend der konkreten Ausgestaltung der Förderschnecken können diese gleichsinnig oder aber gegensinnig drehen. Die Förderschnecken können auf unterschiedliche Art gelagert sein, so beispielsweise fliegend oder beidseits mit jeweils einem Gegenlager.

Insbesondere im Hinblick auf einen störungsfreien Zerkleinerungsprozess bei optimalem Durchsatz ist es von Vorteil, wenn die Drehzahl der Förderschnecken vorzugsweise unter Berücksichtigung der Lastaufnahme des Antriebs geregelt ist. Außerdem könnte eine umfassende Sensorik vorgesehen sein, die die Drehzahl unter Berücksichtigung sonstiger Faktoren beeinflusst.

Die Förderschnecken können zumindest teilweise mit Werkzeugen bestückt sein, wobei die Werkzeuge der Förderschnecken als Messer und/oder Reißzähne ausgeführt sein können. Die Vorkehrung von Reißzähnen dient zur Vereinzelung zusammenhängender Teile und hilft ganze Ballen von Material aufzulösen.

Im Hinblick auf einen störungsfreien Betrieb ist es von weiterem Vorteil, wenn die Förderschnecken über eine Reversiersteuerung rückwärts drehbar sind. Materialstaus bzw. Verstopfungen lassen sich dadurch mühelos auflösen.

Des Weiteren sei erwähnt, dass das Mahlgut auf beliebige Weise der Fördereinheit zuführbar ist. Im Hinblick auf eine besonders einfache Ausgestaltung ist der Fördereinheit ein Trichter zur Aufgabe des Mahlguts vorgebaut. Beliebige sonstige Ausgestaltungen zum Zwecke der Aufgabe des Mahlguts sind realisierbar.

Die Zerkleinerungseinheit kann grundsätzlich sehr unterschiedlich ausgeführt sein, so beispielsweise als Schneidmühle, Hammermühle, Schredder, etc. Unterschiedliche weitere Ausgestaltungen, insbesondere im Detail, sind denkbar.

Im Lichte der voranstehenden Ausführungen lässt sich festhalten, dass sich die erfindungsgemäße Vorrichtung insbesondere zum Zerkleinern leichter Materialien, vorzugsweise zum Zerkleinern von Kunststoff-Hohlkörpern, besonders eignet. Dies ist nicht zuletzt auf die bessere Materialannahme im Bereich der Zerkleinerungseinrichtung zurückzuführen. Aufgrund der besonderen Anordnung der Beschickungseinrichtung zur Drehrichtung des Rotors ist nicht nur die Materialannahme begünstigt, sondern sind vor allem auch Schallemissionen reduziert. Ein weiterer Vorteil ist darin zu sehen, dass die Aufgabehöhe in der erfindungsgemäßen Vorrichtung geringer ist als bei herkömmlichen Zerkleinerern, wodurch sich eine bessere Möglichkeit des An- bzw. Einbaus im Bereich einer Fertigung ergibt.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung eines bevorzugten Ausführungsbeispiels der Erfindung anhand der Zeichnung zu verweisen. In Verbindung mit der Erläuterung des bevorzugten Ausführungsbeispiels der Erfindung anhand der Zeichnung werden auch im Allgemeinen bevorzugte Ausgestaltungen und Weiterbildungen der Lehre erläutert.

In der Zeichnung zeigt
- Fig. 1: in einer schematischen Seitenansicht ein Ausführungsbeispiel einer erfindungsgemäßen Vorrichtung,
- Fig. 2: den Gegenstand aus Fig. 1 im Querschnitt durch die Beschickungseinrichtung und
- Fig. 3: den Gegenstand aus Fig. 1 in einer schematischen Draufsicht.

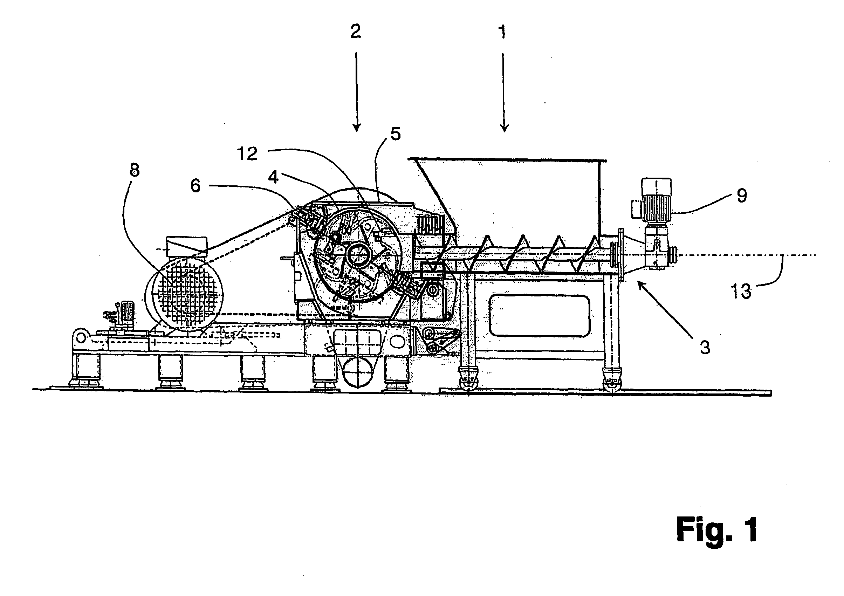

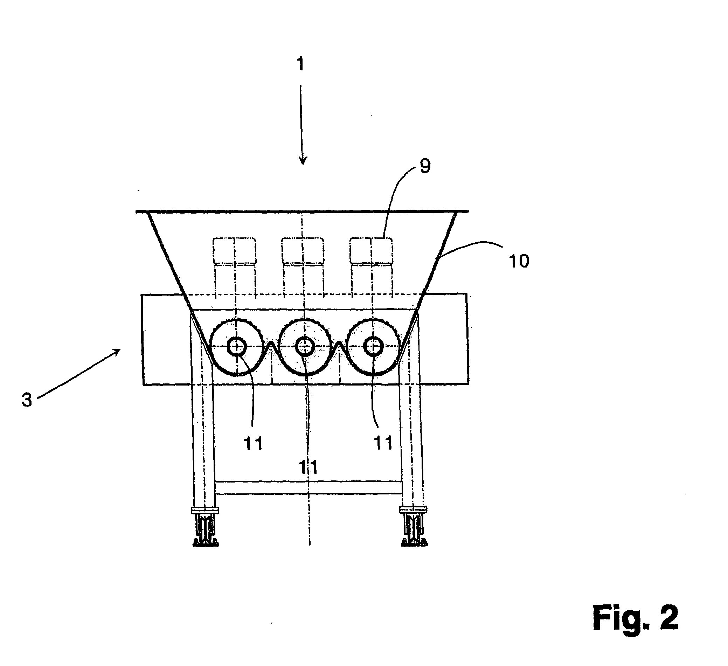

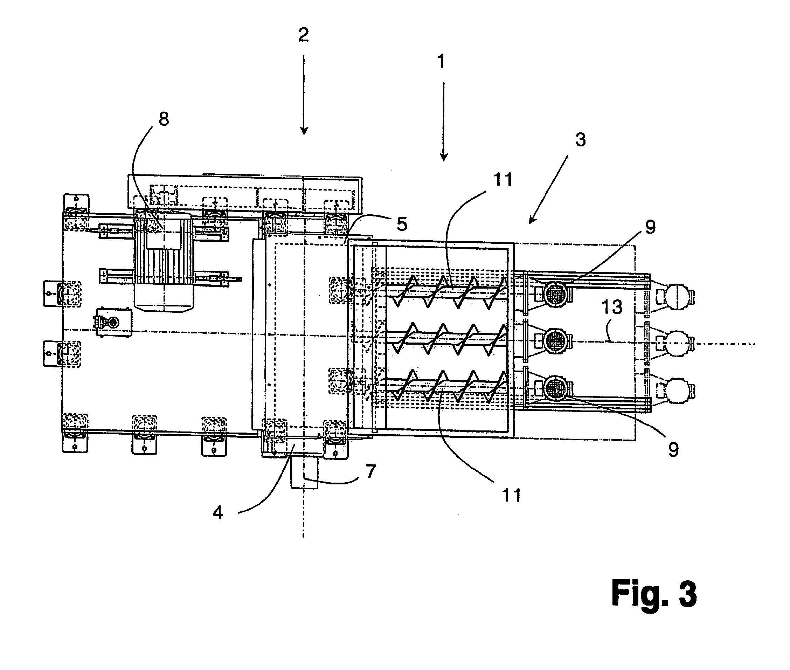

Die Figuren 1 bis 3 zeigen ein Ausführungsbeispiel einer erfindungsgemäßen Vorrichtung zum Zerkleinern von Teilen beliebiger Art, wobei es sich hier im Konkreten um eine Vorrichtung zum Zerkleinern von Kunststoffhohlkörpern handelt, die in den Figuren nicht gezeigt sind. Regelmäßig werden mit einer solchen Vorrichtung Kunststoffflaschen, so beispielsweise PET-Flaschen, zerkleinert. Die Vorrichtung umfasst eine Beschickungseinrichtung 1 und eine Zerkleinerungseinrichtung 2. Die Beschickungseinrichtung 1 umfasst bei dem hier gezeigten Ausführungsbeispiel insgesamt drei Fördereinheiten 3. Die Zerkleinerungseinrichtung 2 umfasst einen werkzeugbestückten Rotor 4, der innerhalb eines Gehäuses 5 dreht. Das Gehäuse 5, oft auch als Stator bezeichnet, ist ebenfalls mit Werkzeugen 6 ausgestattet.

Die Figuren 1 bis 3 zeigen gemeinsamen, dass die Fördereinheit 3 orthogonal zu der Rotorachse 7 fördert, wobei eine Anordnung im Bereich zwischen 45° und 90° zur Rotorachse 7 in erfindungsgemäßer Weise möglich ist.

Die Figuren zeigen des Weiteren einen Antrieb 8 des Rotors und Antriebe 9 der Fördereinheiten 3. Die Antriebe 8, 9 sind unabhängig voneinander, wobei es von Vorteil ist, die Antriebe 9 der Fördereinheiten 3 zu synchronisieren.

Das Mahlgut wird über einen Trichter 10 ausgegeben und wird im unteren Bereich des Trichters 10 von den Fördereinheiten 3 erfasst, die parallel und äquidistant zueinander in einer Ebene verlaufen bzw. sich zur Zerkleinerungseinrichtung 2 hin erstrecken. Die Fördereinheiten 3 sind als Förderschnecken 11 ausgeführt.

In der vollen Breite der drei nebeneinander arbeitenden Förderschnecken 11 wird das Mahlgut zu dem sich orthogonal zu den Förderschnecken 11 erstreckenden Rotor 4 gefördert und wird von den dortigen Werkzeugen 12 erfasst und gemahlen. Aufgrund der Werkzeuge 6 des Gehäuses 5 ist das Stückgut bereits zusammengedrückt und/oder vereinzelt, so dass es mit reduziertem Volumen in den Bereich des Rotors 4 gelangt und dort durch die Werkzeuge 12 zerkleinert bzw. geschreddert werden kann.

Die Figuren lassen des Weiteren erkennen, dass die Rotorachse 7 in etwa auf dergleichen Ebene wie die Drehachse 13 der Förderschnecken 11 liegt. Daraus resultiert eine äußerst geringe Bauhöhe, wobei es durch die konstruktiven Merkmale möglich ist, einen erheblichen Massendurchsatz zu generieren, und dies bei wesentlich geringerer Aufgabenhöhe in den Zerkleinerer als bei herkömmlichen Geräten der gattungsbildenden Art.

In Bezug auf Merkmale, die sich den Figuren nicht entnehmen lassen, sei zur Vermeidung von Wiederholungen auf den allgemeinen Teil der Beschreibung verwiesen.

Schließlich sei angemerkt, dass das voranstehend erörterte Ausführungsbeispiel lediglich der beispielhaften Erörterung der beanspruchten Lehre dient, diese jedoch nicht auf das Ausführungsbeispiel einschränkt.

## Patentansprüche

1. Vorrichtung zum Zerkleinern von Kunststoffen, vorzugsweise von Kunststoffhohlkörpern wie zum Beispiel Kunststoffflaschen, mit einer Beschickungseinrichtung (1) und einer Zerkleinerungseinrichtung (2), wobei die Beschickungseinrichtung (1) mindestens eine Fördereinheit (3) und die Zerkleinerungseinrichtung (2) einen werkzeugbestückten Rotor (4) umfasst, der innerhalb eines Gehäuses (5) dreht, wobei die Fördereinheit (3) zumindest im Bereich unmittelbar vor dem Rotor (4) unter einem Winkel im Bereich zwischen 45° und 90° zu der Rotorachse (7) fördert und dass die Fördereinheit (3) als Förderschnecke (11) ausgeführt ist, **dadurch gekennzeichnet, dass** die Drehzahl der Förderschnecke (11) geregelt ist.

2. Vorrichtung nach Anspruch 1, **dadurch gekennzeichnet, dass** die Drehzahl der Förderschnecke (11) unter Berücksichtigung der Lastaufnahme des Antriebs geregelt ist.

3. Vorrichtung nach einem der Ansprüche 1 bis 2, **dadurch gekennzeichnet, dass** die Förderschnecke (11) über eine Reversiersteuerung rückwärts drehbar ist.

## Claims

1. Device for crushing plastics materials, preferably plastics material hollow members, such as, for example, plastics bottles, having a feeding device (1) and a crushing device (2), the feeding device (1) comprising at least one conveying unit (3) and the crushing device (2) comprising a rotor (4) which is provided with tools and which rotates within a housing (5), the conveying unit (3) conveying at least in the region directly in front of the rotor (4) at an angle in the range between 45° and 90° with respect to the rotor axis (7) and in that the conveying unit (3) is constructed as a helical conveying member (11), **characterised in that** the speed of the helical conveying member (11) is controlled.

2. Device according to claim 1, **characterised in that** the speed of the helical conveying member (11) is controlled taking into account the load capacity of the drive.

3. Device according to either claim 1 or claim 2, **characterised in that** the helical conveying member (11) can be rotated backwards by means of a reverse control unit.

## Revendications

1. Dispositif de broyage de matières plastiques, de préférence de corps creux en matière plastique, comme des bouteilles en matière plastique, avec un dispositif d'alimentation (1) et un dispositif de broyage (2), le dispositif d'alimentation (1) comprenant au moins une unité de convoyage (3) et le dispositif de broyage (2) comprenant un rotor (4) équipé d'un outil, qui tourne à l'intérieur d'un carter (5), l'unité de convoyage (3) effectuant le convoyage au moins dans la zone directement devant le rotor (4), avec un angle entre 45° et 90° par rapport à l'axe du rotor (7) et en ce que l'unité de convoyage (3) est conçue comme une vis sans fin de convoyage (11),
**caractérisé en ce que** la vitesse de rotation de la vis sans fin de convoyage (11) est régulée.

2. Dispositif selon la revendication 1, **caractérisé en ce que** la vitesse de rotation de la vis sans fin de convoyage (11) est régulée en fonction de la charge du dispositif d'entraînement.

3. Dispositif selon l'une des revendications 1 à 2, **caractérisé en ce que** la vis sans fin de convoyage (11) peut être mise en rotation en sens inverse à l'aide d'une commande d'inversion.
